(19) Europäisches Patentamt

European Patent Office

Office européen des brevets

(11) **EP 1 205 133 B1**

(12) **FASCICULE DE BREVET EUROPEEN**

(45) Date de publication et mention
de la délivrance du brevet:
**07.07.2004   Bulletin 2004/28**

(51) Int Cl.⁷: **A47C 31/12**, B64D 11/06,
B60N 2/02

(21) Numéro de dépôt: **01402457.4**

(22) Date de dépôt: **25.09.2001**

(54) **Dispositif d'actionnement d'un élément de siège et siège le comportant**

Betätigungsvorrichtung für ein Sitzelement und damit versehener Sitz

Actuating device of a seat element and seat comprising the same

(84) Etats contractants désignés:
**DE FR GB IT**

(30) Priorité:  **08.11.2000   FR 0014343**

(43) Date de publication de la demande:
**15.05.2002   Bulletin 2002/20**

(73) Titulaire: **Messier-Bugatti
78140 Velizy Villacoublay (FR)**

(72) Inventeur: **Nivet, Laurent
92600 Asnieres (FR)**

(74) Mandataire: **Blot, Philippe Robert Emile et al
c/o Cabinet Lavoix,
2, place d'Estienne d'Orves
75441 Paris Cedex 09 (FR)**

(56) Documents cités:
**FR-A- 2 736 879          FR-A- 2 781 293
US-A- 3 934 928          US-A- 4 250 439
US-A- 4 698 571**

**Description**

La présente invention concerne un dispositif d'actionnement d'un élément de siège, du type comportant un actionneur muni d'un transducteur adapté pour fournir une valeur brute de mesure représentative de la position courante de l'actionneur, voir par example FR-A-2 781 293.

Afin d'améliorer le confort de l'utilisateur, de nombreux sièges sont de nos jours, munis de dispositifs électriques d'actionnement permettant de modifier la configuration du siège par déplacement d'éléments mobiles de celui-ci. En particulier, de tels sièges sont notamment utilisés dans les véhicules de transport tels que les avions, les bateaux et les voitures de chemins de fer.

Il est courant que chaque siège comporte un dossier inclinable articulé à une extrémité d'une assise, ainsi qu'un repose-jambes, articulé à l'autre extrémité de l'assise. Le dossier et le repose-jambes sont tous deux déplaçables sous la commande d'un dispositif d'actionnement entre une position sensiblement verticale et une position sensiblement horizontale, permettant ainsi au siège de prendre plusieurs configurations. Par exemple, parmi ces configurations sont prévues une configuration de couchage de l'utilisateur dans laquelle le dossier et le repose-jambes sont tous deux sensiblement horizontaux et une configuration d'assise dans laquelle le repose-jambes et le dossier sont tous deux sensiblement verticaux.

Un dispositif d'actionnement est prévu pour la commande directe et indépendante de chaque élément mobile du siège.

De plus, de nombreux sièges sont équipés de dispositifs permettant par une commande unique de provoquer le déplacement à la fois du repose-jambes et du repose-pieds et ce, afin d'amener le siège, par une commande unique, dans une configuration prédéterminée.

Pour chacune de ces configurations prédéterminées du siège, une position cible prédéterminée est fixée pour chaque élément de siège et donc chaque actionneur.

Afin de connaître à chaque instant la position des différents éléments de siège, et ainsi pouvoir gérer aisément leur déplacement, il est connu de prévoir dans les dispositifs d'actionnement des éléments de siège, un transducteur tel qu'un potentiomètre permettant de recueillir des valeurs brutes de mesure représentatives de la position courante de chaque actionneur.

Pour chacune des configurations prédéterminées du siège accessibles par un dispositif d'actionnement unique, une valeur cible prédéterminée est mémorisée, cette valeur cible prédéterminée étant égale à la valeur brute de mesure relevée lorsque l'élément de siège est dans la position cible souhaitée.

Ainsi, pour amener un élément du siège vers une position prédéterminée, l'actionneur est mis en action jusqu'à ce que la valeur brute de mesure courante fournie par le transducteur soit égale à la valeur cible prédéterminée correspondant à la position escomptée pour l'actionneur et donc l'élément de siège correspondant.

Par ailleurs, afin d'éviter qu'un élément mobile du siège ne vienne heurter un obstacle, il est connu de suivre la position de cet élément mobile et d'interdire que la valeur brute de mesure fournie par le transducteur ne dépasse une valeur de seuil prédéterminée. Si la valeur brute de mesure fournie par le transducteur est égale à cette valeur de seuil prédéterminée, l'arrêt de l'actionneur est commandé automatiquement, indépendamment de la commande appliquée par le passager.

Dans la pratique, on constate que, du fait des tolérances de fabrication des sièges, des tolérances de fabrication des actionneurs, et des imprécisions mécaniques et électroniques des transducteurs, les différents sièges installés dans un avion ne fournissent pas tous la même valeur brute de mesure pour une même position de l'actionneur associé et une même position de l'élément mobile commandé par l'actionneur. Ainsi, pour une même commande appliquée à plusieurs sièges disposés côte à côte, les positions atteintes par chacun des éléments de ce siège ne sont pas rigoureusement identiques.

Lorsque plusieurs sièges sont disposés côte à côte, comme par exemple dans une rangée de sièges d'un avion, on constate que, lorsque tous les sièges sont amenés dans une même configuration prédéterminée, les positions de chacun des éléments de siège ne sont pas rigoureusement identiques.

Ainsi, l'aspect visuel de l'ensemble des sièges se trouve dégradé. De plus, comme les utilisateurs qui commandent de manière similaire leur siège n'obtiennent pas rigoureusement la même position pour chacun des éléments des sièges, certains d'entre eux peuvent ressentir une frustration.

En outre, quand des valeurs limites de déplacement sont fixées pour certains actionneurs, les valeurs limites de déplacement des éléments mobiles correspondants des différents sièges ne sont pas toutes rigoureusement identiques, rendant ainsi malaisée la gestion des zones d'interdiction de déplacement des éléments de siège.

L'invention a pour but de proposer un dispositif d'actionnement d'un élément de siège, permettant d'assurer que la position atteinte par un élément de siège soit réellement la position escomptée, et en particulier que, lorsque plusieurs sièges équipés de ce dispositif sont installés côte à côte, ceux-ci réagissent de manière analogue lorsqu'ils sont commandés pour atteindre une configuration prédéterminée identique sous l'action d'un ou plusieurs actionneurs.

A cet effet, l'invention a pour objet un dispositif d'actionnement d'un élément de siège du type précité, caractérisé en ce qu'il comporte :

- des moyens de calcul d'une valeur corrigée de la position courante de l'actionneur, à partir de chaque valeur brute de mesure fournie par le transducteur et d'une fonction affine de correction ; et
- des moyens d'exploitation de ladite valeur corrigée de la position courante de l'actionneur.

Suivant des modes particuliers de réalisation, le dispositif comporte l'une ou plusieurs des caractéristiques suivantes :

- il comporte :

  . des moyens de relevé d'au moins deux valeurs brutes de mesure de référence représentatives, chacune, de la position de l'actionneur pour une position de référence identifiée de l'actionneur ;
  . des moyens d'entrée, pour chaque position de référence identifiée de l'actionneur, d'une valeur théorique de référence ; et
  . des moyens d'établissement, à partir desdites au moins deux valeurs brutes de mesure de référence relevées et des valeurs théoriques de référence correspondantes, de ladite fonction affine de correction pour le calcul de la valeur corrigée de la position courante de l'actionneur, à partir de chaque valeur brute de mesure fournie par le transducteur ; et

- lesdits moyens d'établissement de la fonction affine de correction sont adaptés pour établir ladite fonction affine de correction à partir de seulement deux valeurs brutes de mesure de référence ; et
- lesdits moyens d'exploitation comportent des moyens de comparaison en continu de ladite valeur corrigée de la position courante de l'actionneur à au moins une valeur de seuil prédéterminée, et des moyens de pilotage adaptés pour produire un ordre de pilotage en fonction du résultat de la ou chaque comparaison.

L'invention est également relative à un siège comportant au moins un élément mobile et au moins un dispositif d'actionnement tel que défini ci-dessus associé mécaniquement à un élément de siège pour son déplacement.

Suivant des modes particuliers de réalisation, le siège comporte l'une ou plusieurs des caractéristiques suivantes :

- il comporte au moins un élément mobile associé mécaniquement à un dispositif d'actionnement tel que défini ci-dessus, il comporte un dispositif adapté pour, sous l'action d'une commande unique fournie par l'utilisateur, amener le siège dans au moins une configuration prédéterminée, et la ou chaque valeur de seuil prédéterminée est représentative de la position de l'actionneur associé dans une configuration prédéterminée du siège.

Enfin, l'invention est relative à un ensemble de sièges, comportant au moins deux sièges de structure analogue tels que définis ci-dessus.

Suivant un mode particulier de réalisation, lesdits sièges sont disposés côte à côte.

L'invention sera mieux comprise à la lecture de la description qui va suivre, donnée uniquement à titre d'exemple et faite en se référant aux dessins sur lesquels :

- la figure 1 est une vue schématique de côté d'un siège équipé de deux dispositifs d'actionnement selon l'invention ;
- la figure 2 est une vue schématique d'un actionneur d'un dispositif d'actionnement selon l'invention ;
- la figure 3 est un organigramme illustrant le processus de calibrage d'un dispositif d'actionnement selon l'invention ;
- la figure 4 est une courbe illustrant les calculs effectués lors du procédé de calibrage et lors du calcul de valeurs corrigées de position ; et
- les figures 5 et 6 sont deux organigrammes explicitant le fonctionnement d'un dispositif d'actionnement selon l'invention.

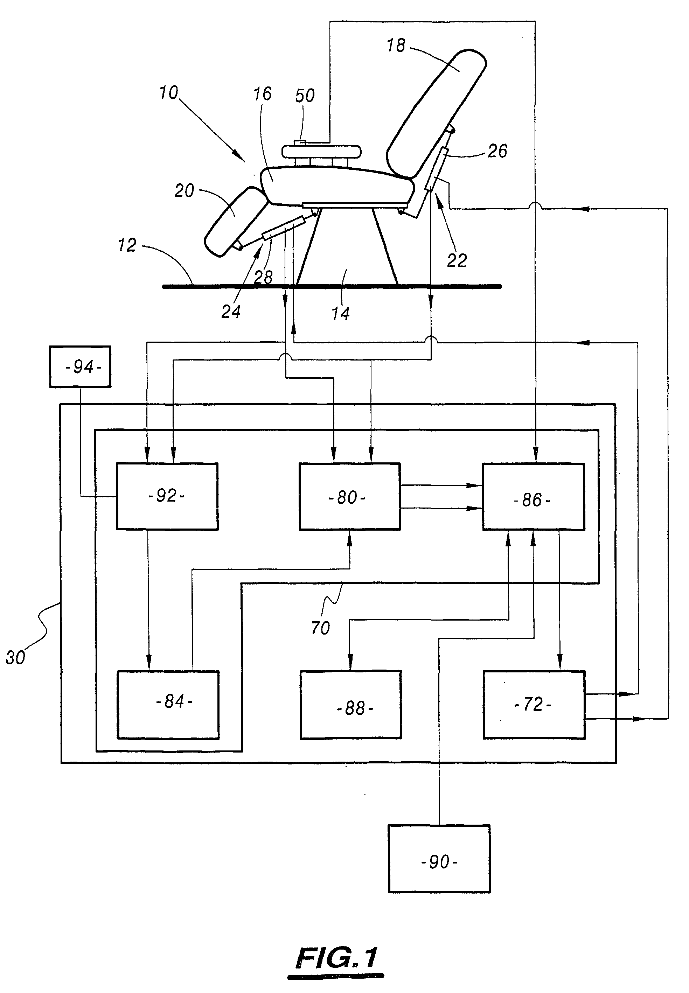

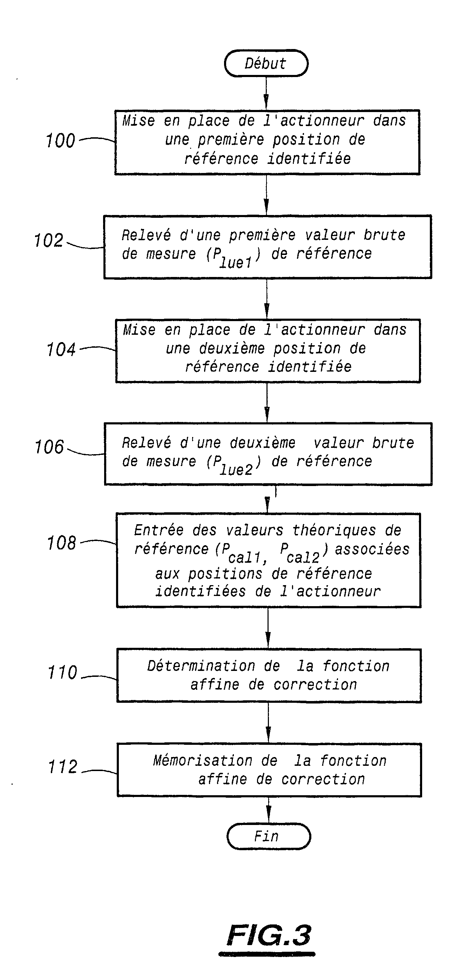

Le siège 10 représenté sur la figure 1 est un siège de passager d'un avion. Ce siège est fixé sur le sol 12 de l'avion.

Le siège 10 comporte un piétement 14 solidaire du sol 12 sur lequel repose une assise 16 sensiblement horizontale. A une extrémité de l'assise est articulé un dossier 18 déplaçable entre une position sensiblement verticale et une position sensiblement horizontale dans laquelle il prolonge l'assise 16.

A l'autre extrémité de l'assise 16, est articulé un repose-jambes 20 déplaçable entre une position rabattue sensiblement verticale au-dessous de l'assise 16 et une position étendue sensiblement horizontale dans le prolongement de l'assise 16.

Un premier dispositif d'actionnement 22 est monté entre l'assise 16 et le dossier 18 afin d'assurer un déplacement de ce dernier entre sa position verticale et sa position horizontale.

De même, un second dispositif d'actionnement 24 est monté entre l'assise 16 et le repose-jambes 20 afin d'assurer un déplacement de ce dernier entre sa position rabattue et sa position étendue.

Chaque dispositif d'actionnement 22, 24 comporte un actionneur propre, noté 26, 28 respectivement. Ces actionneurs sont alimentés en courant électrique depuis une unité de commande commune 30 constituant une partie des dispositifs d'actionnement de chaque élément du siège. Cette unité de commande 30 est reliée séparément à chacun des actionneurs 26, 28 afin d'assurer leur pilotage indépendant.

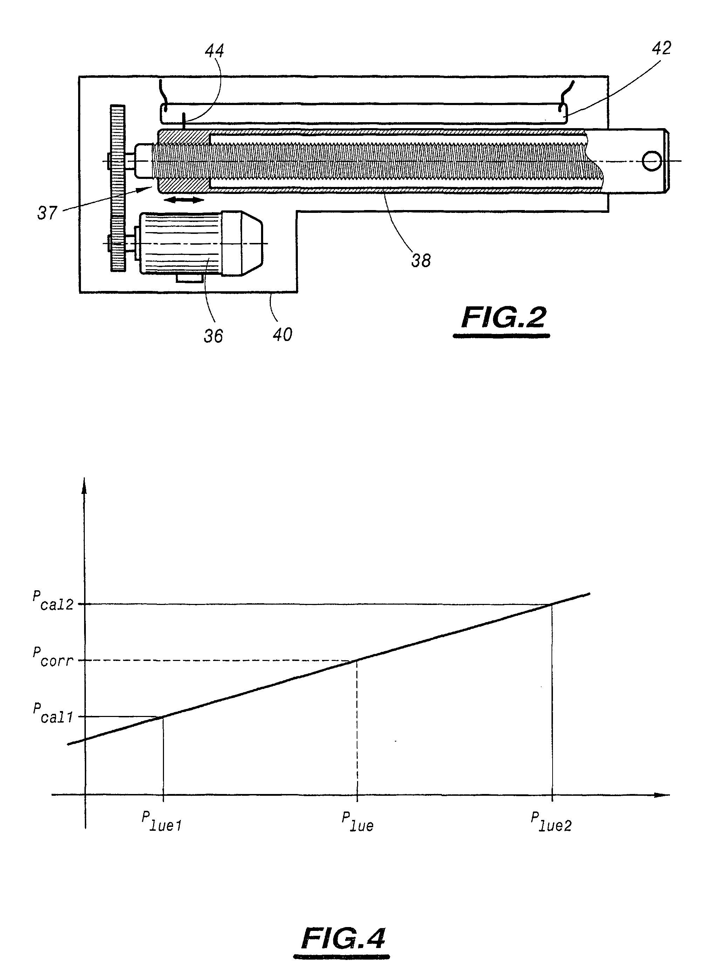

Les actionneurs 26 et 28 ont sensiblement la même structure. L'un d'eux est illustré schématiquement sur la figure 2.

Ainsi, un actionneur comporte un groupe motoréducteur 36 associé, comme connu en soi, par exemple à l'aide d'un agencement vis-écrou 37 à une tige 38 mobile en translation par rapport à un carter 40 dans lequel est fixé le groupe motoréducteur.

En outre, un potentiomètre 42 ou tout autre type de transducteur adapté est fixé au carter 40. Un curseur 44 du potentiomètre est solidarisé à une extrémité de la tige 38 de l'actionneur. Le potentiomètre 42 est relié à l'unité de commande 30. Ainsi, le potentiomètre 42 permet à l'unité de commande 30 de recueillir en continu une valeur brute de mesure représentative de la position courante de l'actionneur. Cette valeur brute de mesure est la valeur de résistance du potentiomètre dans le cas considéré.

Un clavier 50 (figure 1) ou tout autre organe de commande est solidarisé au siège pour permettre à l'utilisateur de commander séparément et directement chaque actionneur du siège. Le clavier permet également d'atteindre par une commande unique agissant sur plusieurs actionneurs une de trois configurations prédéterminées du siège. Le nombre de configurations distinctes peut être différent de trois, par exemple égal à deux ou supérieur à quatre. A cet effet, le clavier comporte, dans l'exemple considéré, trois boutons chacun associé à une configuration prédéterminée. Ces configurations sont une configuration de repas, une configuration d'atterrissage et une configuration de couchage.

Une autre position prédéterminée peut être définie directement par l'utilisateur et est accessible par un bouton spécifique.

Dans la configuration de repas, le repose-jambes 20 et le dossier 18 se trouvent tous deux dans des positions prédéterminées dans lesquelles ils sont rigoureusement verticaux et définissent un angle de 90° avec le plan de l'assise.

Dans la configuration d'atterrissage, le dossier 18 et le repose-jambes 20 sont dans des positions prédéterminées telles que le dossier 18 définit un angle d'environ 20° avec le plan de l'assise alors que le repose-jambes 20 définit un angle d'environ 10° avec la verticale.

Dans la configuration de couchage, le dossier 18 et le repose-jambes 20 sont dans des positions prédéterminées dans lesquelles ils prolongent l'assise 16 et s'étendent ainsi sensiblement dans le plan de celle-ci.

Afin d'assurer la commande du siège, l'unité de commande 30 comporte une unité centrale de traitement d'informations 70 à laquelle est relié le clavier 50. De plus, les potentiomètres des deux actionneurs 26 et 28 sont également reliés à cette unité centrale de traitement d'informations 70 afin de fournir à celle-ci en continu, pour chaque actionneur, une valeur brute de mesure représentative de la position courante de l'actionneur.

L'unité centrale de traitement d'informations 70 est reliée à une unité 72 d'alimentation des actionneurs 26 et 28. L'unité 72 est adaptée pour alimenter en courant électrique les actionneurs 26 et 28 en fonction d'ordres de commande reçus de l'unité centrale de traitement d'informations 70. En particulier, le courant électrique fourni par l'unité d'alimentation 72 est adapté pour assurer une vitesse satisfaisante des actionneurs ainsi qu'un courant ayant une forme permettant le déplacement de l'actionneur dans le sens souhaité.

L'unité de traitement d'informations 70 est adaptée pour commander le siège à partir des valeurs brutes de mesure reçues des différents transducteurs installés dans les actionneurs du siège.

Toutefois, selon l'invention, les valeurs brutes de mesure issues des transducteurs sont corrigées pour tenir compte des tolérances de fabrication du siège et des imprécisions des transducteurs avant d'être traitées et exploitées au sein de l'unité de traitement d'informations 70.

A cet effet, l'unité centrale de traitement d'informations 70 comporte des moyens 80 adaptés pour assurer une correction des valeurs brutes de mesure issues des transducteurs implantés dans les actionneurs 26 et 28. Ces moyens de correction 80 sont adaptés pour corriger les valeurs brutes de mesure en fonction d'informations de correction, et en particulier par mise en oeuvre d'une fonction affine de correction stockée dans une mémoire 84.

En outre, l'unité de traitement 70 comporte des moyens de pilotage désignés par la référence générale 86. Ces moyens de pilotage reçoivent, des moyens de correction 80, des valeurs corrigées des positions courantes de chaque actionneur calculées à partir des valeurs brutes de mesure fournies par les transducteurs.

Les moyens de pilotage 86 sont adaptés pour adresser des ordres de commande à l'unité d'alimentation 72.

L'unité de commande 30 comporte par ailleurs une mémoire 88 à laquelle sont reliés les moyens de pilotage 86. Dans la mémoire 88 sont stockées des valeurs de seuil prédéterminées, notées généralement $P_{pred}$, correspondant aux positions cibles devant être prises par les éléments de siège lors de la modification du siège vers une configuration prédéterminée.

Ainsi, pour chaque élément de siège, plusieurs valeurs de seuil prédéterminées sont mémorisées. Chaque valeur de seuil prédéterminée correspond à une position cible pour un élément de siège, cette position cible étant définie pour une configuration prédéterminée du siège.

En outre, deux autres valeurs de seuil prédéterminées, notées $P_{min}$ et $P_{max}$ sont mémorisées pour chaque actionneur dans la mémoire 88. Ces valeurs de seuil prédéterminées constituent des valeurs limites de débattement et correspondent aux positions extrêmes autorisées pour l'actionneur dans le siège et définissent donc la plage de débattement de celui-ci pour le siège considéré.

La mémoire 88 est réinscriptible sous la commande des moyens de pilotage 86 de l'unité centrale. En particulier, l'unité centrale de traitement d'informations 70 est adaptée pour, lors de la réception d'un ordre de commande adapté issu par exemple d'un clavier annexe amovible 90, mémoriser, dans la mémoire 88, les valeurs de seuil prédéterminées pour chaque actionneur.

Les moyens de pilotage 86 sont adaptés pour assurer des comparaisons entre les positions courantes corrigées reçues des moyens de correction 80 et les valeurs de seuil prédéterminées stockées dans la mémoire 88.

Afin d'assurer la détermination et le stockage de la fonction affine de correction mémorisée dans la mémoire 84, l'unité centrale de traitement d'informations 70 comporte des moyens de calibrage 92 associés à des moyens 94 d'entrée d'informations. Ces moyens d'entrée d'informations sont avantageusement amovibles. Ils sont constitués par exemple d'un clavier, notamment un clavier d'un ordinateur portable permettant d'adresser aux moyens de calibrage 92 des ordres de relevé d'informations et des valeurs théoriques de référence.

Les moyens de calibrage 92 sont reliés à chacun des transducteurs 42 afin de recevoir en continu les valeurs brutes de mesure fournies par ces transducteurs.

Les moyens de calibrage 94 sont en outre reliés à la mémoire 84 pour le stockage d'une fonction de correction élaborée par les moyens de calibrage pour chacun des actionneurs du siège.

Dans la pratique, l'unité centrale de traitement d'informations 70 est formée d'un microprocesseur associé à un environnement fonctionnel adapté, comportant notamment des moyens de stockage d'un ensemble de programmes mis en oeuvre par le microprocesseur afin d'assurer les fonctions des moyens de correction 80, des moyens de pilotage 86 et des moyens de calibrage 92.

Afin de déterminer et de mémoriser chaque fonction affine de correction, l'algorithme de calibrage décrit sur la figure 3 est mis en oeuvre. Cet algorithme est décrit pour le calibrage d'un actionneur commandant un élément de siège mobile. Toutefois, un algorithme analogue est mis en oeuvre pour le calibrage de chaque actionneur.

A l'étape 100, l'élément commandé par l'actionneur est amené manuellement dans une première position de référence identifiée. A l'étape 102, par enfoncement d'une touche prédéterminée des moyens d'entrée d'informations 94, une première valeur brute de mesure de référence notée, $P_{lue1}$, est relevée par les moyens de calibrage 92. Cette valeur est temporairement mémorisée.

L'élément de siège est ensuite amené manuellement jusqu'à une deuxième position de référence identifiée à l'étape 104.

A l'étape 106, par l'enfoncement d'une touche prédéterminée des moyens d'entrée d'informations 94. Une deuxième valeur brute de mesure de référence, notée $P_{lue2}$, représentative de la position de l'actionneur dans sa deuxième position de référence identifiée est enregistrée par les moyens de calibrage 92.

A l'étape 108, des valeurs théoriques de référence, notées $P_{cal1}$ et $P_{cal2}$, associées aux première et deuxième positions de référence identifiées de l'actionneur considérées aux étapes 100 et 104, sont entrées dans les moyens de calibrage 92. Ces valeurs identifiées sont saisies par exemple au clavier depuis les moyens d'entrée d'informations 94.

Ces valeurs théoriques sont égales ou proportionnelles aux valeurs brutes que devrait fournir le potentiomètre d'un actionneur supposé idéal lorsque l'actionneur est dans sa première position de référence identifiée et dans sa deuxième position de référence identifiée.

Enfin, à l'étape 110, une fonction affine de correction est établie à partir des valeurs brutes de mesure de référence relevées $P_{lue1}$ et $P_{lue2}$ et des valeurs théoriques de référence $P_{cal1}$ et $P_{cal2}$.

Comme illustré sur la figure 4, la fonction affine calculée correspond à l'équation de la droite passant par les points d'abscisse ($P_{lue1}$, $P_{cal1}$) et ($P_{lue2}$, $P_{cal2}$) dans un repère où les valeurs brutes de mesure sont représentées en abscisse et les valeurs théoriques en ordonnée.

La fonction de correction correspondant à l'équation de la droite précitée est donnée par la formule :

$$P_{corr} = P_{lue} - \{a(P_{lue} - P_{cal1}) + b\}$$

où :

$P_{corr}$ est la valeur corrigée correspondant à la valeur brute qui aurait dû être obtenue avec un actionneur idéal, et

$P_{lue}$ est la valeur brute de mesure courante effectivement relevée.

Dans la formule de correction précitée, b est donné par la formule :

$$b = P_{lue1} - P_{cal1},$$

et a est donné par la formule :

$$a = ((P_{lue2} - P_{cal2}) - b) / (P_{lue2} - P_{lue1}).$$

b correspond au décalage initial de la course réelle de l'actionneur et de la course théorique d'un actionneur idéal, alors que a correspond à la différence de pente entre la pente caractéristique de l'actionneur et la pente théorique d'un actionneur idéal.

A l'étape 102, la fonction affine calculée permettant de déterminer une valeur corrigée de la position courante de l'actionneur à partir de la valeur brute de mesure fournie par le transducteur est mémorisée dans la mémoire 84.

Un tel algorithme de calibrage à partir de deux valeurs relevées est mis en oeuvre pour chaque actionneur de chaque siège d'un véhicule tel qu'un avion.

En variante, tous les actionneurs d'un même siège peuvent être calibrés simultanément. A cet effet, chaque élément de siège est amené manuellement dans une première position de référence identifiée. Une première valeur brute de mesure de référence est alors relevée pour chaque actionneur. Chaque élément de siège est ensuite amené manuellement dans une deuxième position de référence identifiée. Une deuxième valeur brute de mesure de référence est alors relevée pour chaque élément de siège. Des fonctions affines de correction sont calculées pour chaque actionneur en fonction des première et deuxième valeurs brutes de mesure de référence.

Avantageusement, lorsque plusieurs sièges identiques sont disposés dans un même véhicule, et notamment lorsque plusieurs sièges identiques sont disposés côte à côte, les positions de référence identifiées utilisées pour le calibrage sont les mêmes pour les actionneurs respectifs de chacun des sièges. De plus, les valeurs théoriques de référence de chacun des dispositifs de commande de chacun des sièges pour les actionneurs correspondants sont fixées avantageusement à des valeurs identiques.

Ainsi, pour la programmation des moyens de pilotage 86 des sièges, les mêmes algorithmes et les mêmes valeurs peuvent être utilisés pour chacun des sièges. En particulier, les valeurs de seuil prédéterminées mémorisées dans les mémoires 88 de chacun des sièges peuvent être prises identiques avec l'assurance d'obtenir un même comportement des sièges.

Cette phase initiale de calibrage n'est mise en oeuvre que lors du montage des sièges. Les fonctions de correction stockées dans la mémoire 84 sont ensuite conservées pour toute la durée de vie du siège. Toutefois, ces fonctions peuvent être modifiées, si nécessaire, afin de définir une nouvelle fonction affine de calibrage par exemple suite au remplacement, à la réparation d'un actionneur, ou au changement d'un élément de siège.

En dehors de cette phase initiale de calibrage, l'unité de commande 30 est adaptée pour mettre en oeuvre un ensemble d'algorithmes de commande de chaque actionneur afin, soit de déplacer un élément de siège suite à une commande directe de l'utilisateur, soit de déplacer cet élément de siège jusqu'à une position cible prédéterminée associée à une configuration prédéterminée du siège requise par l'utilisateur.

Des tests sont effectués en continu pour scruter l'enfoncement d'une touche du clavier 50 correspondant à une commande directe d'un élément de siège ou à une commande du siège vers une configuration prédéterminée.

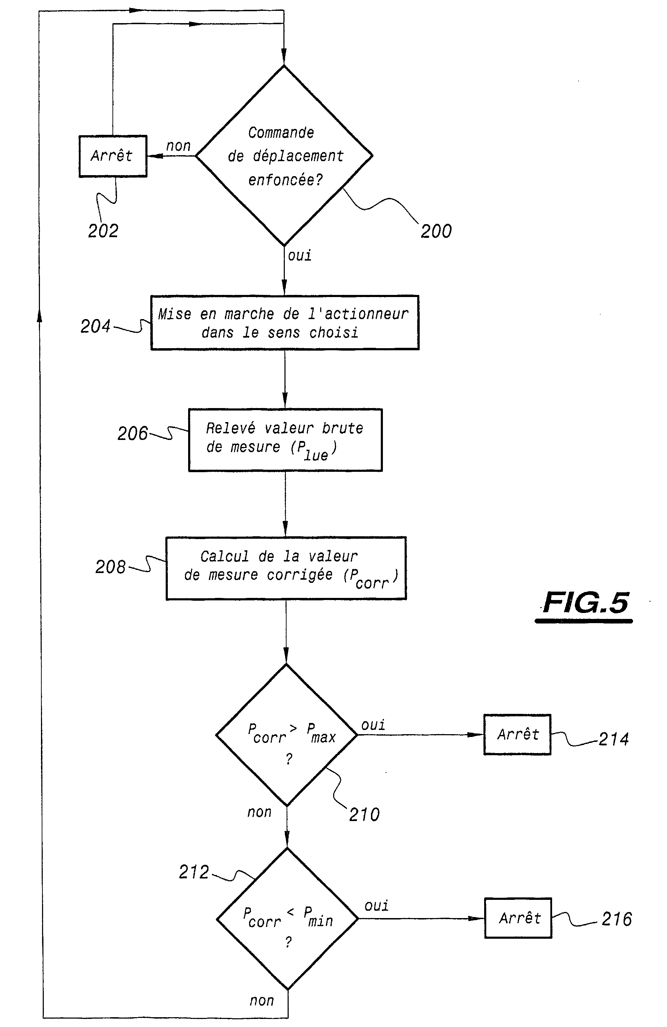

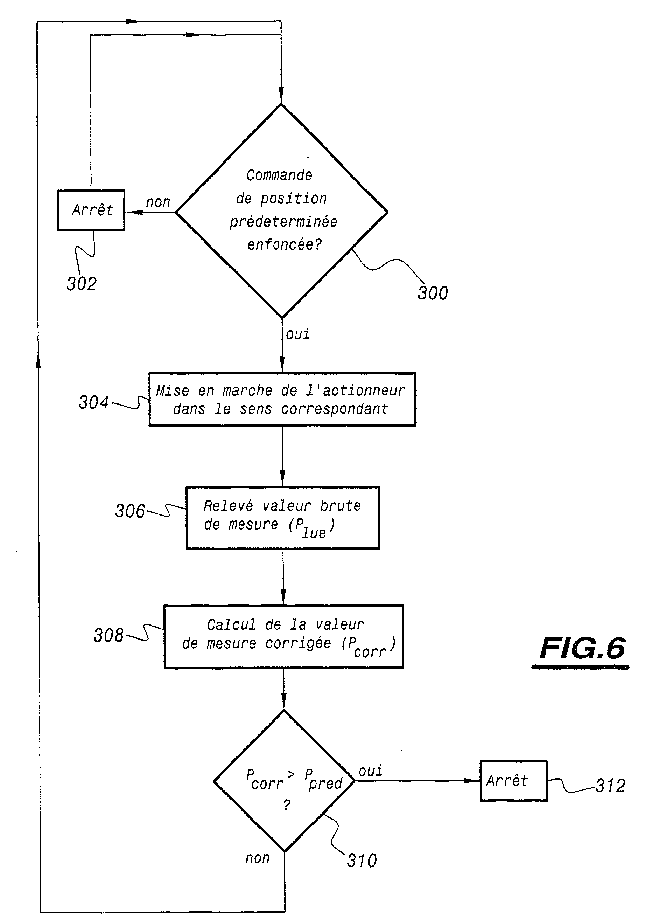

Deux exemples de tels algorithmes sont données sur les figures 5 et 6.

Sur la figure 5 est illustré l'algorithme permettant le déplacement d'un actionneur, par exemple l'actionneur 28 agissant sur le repose-jambes 20.

Le test est mis en oeuvre à l'étape 200 détermine si la touche propre à la commande directe de l'actionneur en cause a été enfoncée dans un sens ou dans un autre. Si tel n'est pas le cas, l'actionneur est maintenu à l'arrêt à l'étape 202 ou l'actionneur est arrêté si celui-ci est en mouvement.

Si, à l'étape 200, l'enfoncement d'une commande de déplacement est détecté, l'actionneur correspondant est mis en marche dans le sens choisi, à l'étape 204.

A l'étape 206, un relevé de la valeur brute de mesure $P_{lue}$ est effectué par l'unité de commande 30. Cette valeur brute correspond à la valeur de la résistance du potentiomètre installé sur l'actionneur considéré.

A l'étape 208, une valeur de mesure corrigée $P_{corr}$ est calculée par les moyens de correction 80 à partir de la valeur brute de mesure relevée et de la fonction affine de correction stockée dans la mémoire 84.

Aux étapes 210 et 212, la valeur de mesure corrigée $P_{corr}$ est comparée, par les moyens de pilotage 86, aux valeurs limites de déplacement de l'actionneur, notées $P_{max}$ et $P_{min}$.

Si la valeur de mesure corrigée $P_{corr}$ est supérieure à la valeur $P_{max}$ ou inférieure à la valeur $P_{min}$, l'arrêt de l'actionneur est commandé à l'une des étapes 214 et 216. En effet, si l'un des tests effectués aux étapes 210 et 212 est vérifié, l'actionneur est en bout de course et celui-ci doit être arrêté.

A l'issue de l'étape de test 212, l'étape 200 est à nouveau mise en oeuvre afin d'assurer un déroulement en boucle de la succession d'étapes décrites précédemment.

On conçoit qu'avec la mise en oeuvre d'un tel algorithme, les tests conduits aux étapes 210 et 212 étant effectués non pas sur les valeurs brutes de mesures $P_{lue}$ mais sur les valeurs de mesure corrigées $P_{corr}$, la mise en oeuvre de l'algorithme ne dépend pas des tolérances de fabrication du siège et de l'actionneur, ni des imprécisions du transducteur intégré à l'actionneur. En effet, l'influence de ces tolérances et imprécisions est supprimée du fait du calibrage préalable du dispositif de commande, ce calibrage permettant d'effectuer des tests sur des valeurs correspondant à des valeurs théoriques qui auraient été rencontrées avec un actionneur idéal.

Sur la figure 6 est illustré un autre algorithme mis en oeuvre par un dispositif de commande selon l'invention. Cet algorithme correspond au cas d'une commande d'un siège vers une configuration prédéterminée.

A l'étape 300, un test est effectué pour détecter l'enfoncement d'une commande de configuration prédéterminée. Quand une telle commande n'est pas enfoncée, l'actionneur est maintenu arrêté à l'étape 302 ou, si celui-ci est en marche, son arrêt est commandé lors de cette étape.

Lors de la détection de l'enfoncement d'une commande de configuration prédéterminée, l'actionneur associé est mis en marche à l'étape 304 dans le sens correspondant à la position cible prédéterminée de l'élément de siège associée à la configuration souhaitée.

A l'étape 306, un relevé de la valeur brute de mesure $P_{lue}$ est effectué par l'unité de commande 30.

A partir de la valeur brute de mesure $P_{lue}$ et de la fonction affine de correction mémorisée, un calcul de la valeur de mesure corrigée $P_{corr}$ est effectué à l'étape 308 par les moyens de correction 80.

Cette valeur de mesure corrigée $P_{corr}$ est fournie aux moyens de pilotage 86, lesquels effectuent, à l'étape 310, un test visant à comparer la valeur de mesure corrigée $P_{corr}$ à une valeur de seuil prédéterminée $P_{pred}$ correspondant à la position cible prédéterminée de l'élément de siège.

Si la valeur de mesure corrigée $P_{corr}$ est supérieure (ou inférieure suivant le sens de déplacement) à la valeur de seuil prédéterminée $P_{pred}$, l'arrêt de l'actionneur est commandé à l'étape 312. Si tel n'est pas le cas, l'étape 300 est à nouveau mise en oeuvre afin que la succession d'étapes décrites précédemment soit mise en oeuvre en boucle.

On comprend qu'avec un algorithme tel que défini ci-dessus, la valeur de seuil prédéterminé $P_{pred}$ peut être indépendante des tolérances de fabrication du siège et des imprécisions du transducteur mis en oeuvre dans l'actionneur. En effet, les valeurs de mesure corrigées comparées à cette valeur de seuil prédéterminée sont elles-mêmes indépendantes des tolérances et imprécisions du transducteur, du fait de la calibration préalable du dispositif de commande.

Ainsi, les mêmes valeurs de seuil prédéterminées peuvent être utilisées pour chacun des sièges adjacents, en étant assuré que la mise en oeuvre des algorithmes précités identiques dans les différents sièges conduiront à amener les éléments de siège correspondants des différents sièges dans des positions rigoureusement identiques, lors de l'application de commandes identiques sur ces différents sièges.

Dans l'exemple décrit précédemment, la fonction affine de correction de chaque actionneur est déterminée à partir de seulement deux points.

En variante, elle est calculée à partir de plus de deux points par exemple par un algorithme des moindres carrés.

## Revendications

**1.** Dispositif (22, 24) d'actionnement d'un élément de siège, du type comportant :

- un actionneur (26, 28) muni d'un transducteur (42) adapté pour fournir une valeur brute de mesure ($P_{lue}$) représentative de la position courante de l'actionneur,

**caractérisé en ce qu'**il comporte :

- des moyens (80, 84) de calcul d'une valeur corrigée ($P_{corr}$) de la position courante de l'actionneur, à partir de chaque valeur brute de mesure ($P_{lue}$) fournie par le transducteur et d'une fonction affine de correction pour tenir compte des tolérances de fabrication du siège et des imprécisions du transducteur ; et
- des moyens (86) d'exploitation de ladite valeur corrigée ($P_{corr}$) de la position courante de l'actionneur.

**2.** Dispositif d'actionnement selon la revendication 1, **caractérisé en ce qu'**il comporte :

- des moyens (92) de relevé d'au moins deux valeurs brutes de mesure de référence ($P_{lue1}$, $P_{lue2}$) représentatives, chacune, de la position de l'actionneur pour une position de référence identifiée de l'actionneur ;
- des moyens (94) d'entrée, pour chaque position de référence identifiée de l'actionneur, d'une valeur théorique de référence ($P_{cal1}$, $P_{cal2}$) ; et
- des moyens (92) d'établissement, à partir desdites au moins deux valeurs brutes de mesure de référence ($P_{lue1}$, $P_{lue2}$) relevées et des valeurs théoriques de référence ($P_{cal1}$, $P_{cal2}$) correspondantes, de ladite fonction affine de correction pour le calcul de la valeur corrigée ($P_{corr}$) de la position courante de l'actionneur, à partir de chaque valeur brute de mesure ($P_{lue}$) fournie par le transducteur.

**3.** Dispositif d'actionnement selon la revendication 2, **caractérisé en ce que** lesdits moyens (92) d'établissement de la fonction affine de correction sont adaptés pour établir ladite fonction affine de correction à partir de seulement deux valeurs brutes de mesure de référence.

**4.** Dispositif d'actionnement selon l'une quelconque des revendications précédentes, **caractérisé en ce que** lesdits moyens d'exploitation comportent des moyens (96) de comparaison en continu de ladite valeur corrigée ($P_{corr}$) de la position courante de l'actionneur à au moins une valeur de seuil prédéterminée, et des moyens de pilotage (86) adaptés pour produire un ordre de pilotage en fonction du résultat de la ou chaque comparaison.

5. Sièges comportant au moins un élément mobile (18, 20) et au moins un dispositif (22, 24) d'actionnement selon l'une quelconque des revendications précédentes associé mécaniquement à un élément de siège (18, 20) pour son déplacement.

6. Siège selon la revendication 5, **caractérisé en ce qu'**il comporte au moins un élément mobile (18, 20) associé mécaniquement à un dispositif (22, 24) d'actionnement selon la revendication 4, **en ce qu'**il comporte un dispositif (50) adapté pour, sous l'action d'une commande unique fournie par l'utilisateur, amener le siège dans au moins une configuration prédéterminée, et **en ce que** la ou chaque valeur de seuil prédéterminée est représentative de la position de l'actionneur associé dans une configuration prédéterminée du siège.

7. Ensemble de sièges, comportant au moins deux sièges de structure analogue selon l'une quelconque des revendications 5 et 6, **caractérisé en ce que** le ou chaque dispositif (22, 24) d'actionnement est selon la revendication 2 ou 3, et **en ce que** les positions de référence identifiées des actionneurs, pour les dispositifs d'actionnement respectifs de chacun des sièges, sont identiques.

8. Ensemble de sièges selon la revendication 7, **caractérisé en ce que** lesdits sièges sont disposés côte à côte.

**Patentansprüche**

1. Vorrichtung (22, 24) zum Betätigen eines Sitzelenlerites mit

   - einem Betätigungsglied (26, 28), das mit einem Messwandler (42) versehen ist, der einen Messrohwert ($P_{lue}$) liefern kann, der die gegenwärtige Position.des Betätigungsgliedes wiedergibt, **gekennzeichnet durch**
   - Einrichtungen (80, 84) zum Berechnen eines korrigierten Wertes ($P_{corr}$) der gegenwärtigen Position des Betätigungsgliedes aus jedem Messrohwert ($P_{lue}$), der vom Messwandler kommt und einer Feinkorrekturfunktion, die die Toleranzen der Herstellung des Sitzes und die Ungenauigkeiten des Wandlers berücksichtigt, und
   - Einrichtungen (86) zum Auswerten des korrigierten Wertes ($P_{corr}$) der gegenwärtigen Position des Betätigungsgliedes.

2. Vorrichtung zum Betätigen nach Anspruch 1, **gekennzeichnet durch**

   - Einrichtungen (92) zum Aufnehmen wenigstens zweier Bezugsmessrohwerte ($P_{lue1}$, $P_{lue2}$), die die Position des Betätigungsgliedes für eine bestimmte Bezugsposition des Betätigungsgliedes jeweils wiedergeben,
   - Einrichtungen (94) zum Eingeben eines theoretischen Bezugswertes ($P_{call}$, $P_{cal2}$) für jede bestimmte Position des Stellgliedes und
   - Einrichtungen (92), die ausgehend von den besagten wenigstens zwei aufgenommenen Bezugsmessrohwerten ($P_{lue1}$, $P_{lue2}$) und den entsprechenden theoretischen Bezugswerten ($P_{cal1}$, $P_{cal2}$) die besagte Feinkorrekturfunktion bilden, um den korrigierten .Wert ($P_{corr}$) der gegenwärtigen Position des Betätigungsgliedes aus jedem Messrohwert ($P_{lue}$) vom Messwandler zu berechnen.

3. Vorrichtung zum Betätigen nach Anspruch 2, **dadurch gekennzeichnet, dass** die besagten Einrichtungen (92) zum Bilden der Feinkorrekturfunktion so ausgebildet sind, dass sie die Feinkorrekturfunktion aus nur zwei Bezugsmessrohwerten bilden.

4. Vorrichtung zum Betätigen nach einem der vorhergehenden Ansprüche, **dadurch gekennzeichnet, dass** die Einrichtungen zum Auswerten Einrichtungen (96), die laufend den besagten korrigierten Wert ($P_{corr}$) der gegenwärtigen Position des Betätigungsgliedes mit wenigstens einem bestimmten Schwellenwert vergleichen, und Steuereinrichtungen (86) umfassen, die einen Steuerbefehl in Abhängigkeit von dem Ergebnis des oder jedes Vergleiches bilden können.

5. Sitz mit wenigstens einem beweglichen Element (18, 20) und wenigstens einer Vorrichtung (22, 24) zum Betätigen nach einem der vorhergehenden Ansprüche, welche mechanisch mit einem Sitzelement (18, 20) für dessen Versetzung verbunden ist.

6. Sitz nach Anspruch 5, **dadurch gekennzeichnet, dass** er wenigstens ein bewegliches Element (18, 20) umfasst, das mechanisch mit einer vorrichtung (22, 24) zum Betätigen nach Anspruch 4 verbunden ist, und dass er eine Vorrichtung (50) umfasst, die unter der Wirkung eines einzigen Befehls von einem Benutzer den Sitz in wenigstens eine bestimmte Gestaltung bringen kann und dass der oder jeder bestimmte Schwellenwert die Position des Betätigungsgliedes wiedergibt, die es in der bestimmten Form des Sitzes hat.

7. Sitzanordnung mit wenigstens zwei Sitzen analoger Konstruktion nach einem der Ansprüche 5 und 6, **dadurch gekennzeichnet, dass** die oder jede Vorrichtung (22, 24) zum Betätigen nach Anspruch 2 oder 3 ausgebildet ist und dass die bestimmten Bezugspositionen der Betätigungsglieder für die jeweiligen Vorrichtungen zum Betätigen aller Sitze identisch sind.

**8.** Sitzanordnung nach Anspruch 7, **dadurch gekennzeichnet, dass** die Sitze Seite an Seite angeordnet sind.


**Claims**

**1.** Actuating device (22, 24) of a seat element of the type comprising

- an actuator (26, 28) fitted with a transducer (42) adapted to provide a rough measurement value ($P_{lue}$) representative of the current position of the actuator,

   **characterised in that** it comprises :

- means (80, 84) for calculating the modified value ($P_{corr}$) of the current position of the actuator, from each rough measurement value ($P_{lue}$) provided by the transducer and from an refining correction function to take into account tolerances in manufacturing the seat and transducer inaccuracies; and
- means (86) for exploiting the said modified value ($P_{corr}$) of the current position of the actuator.

**2.** Actuating device according to claim 1, **characterised in that** it comprises :

- means (92) for logging at least two rough reference measurement values ($P_{lue1}$, $P_{lue2}$) each representative of the position of the actuator as an identified reference position of the actuator;
- means (94) for inputting, for each identified reference position of the actuator, a theoretical reference value ($P_{cal1}$, $P_{cal2}$); and
- means (92) for establishing, from at least two of the said logged rough reference measurement values ($P_{lue1}$, $P_{lue2}$) and from the corresponding theoretical reference values ($P_{cal1}$, $P_{cal2}$), the said refining correction function for calculating the modified value ($P_{corr}$) of the current position of the actuator from each rough measurement value ($P_{lue}$) provided by the transducer.

**3.** Actuating device according to claim 2, **characterised in that** the said means (92) for establishing the refining correction function are adapted to establish the said refining correction function from only two rough reference measurement values.

**4.** Actuating device according to any of the preceding claims, **characterised in that** the said exploitation means comprise means (96) for continuous comparison of the said modified value ($P_{corr}$) of the current position of the actuator with at least one predetermined threshold value, and control means (86) adapted to produce a control signal according to the result of the, or each, comparison.

**5.** Seat comprising at least one movable element (18, 20) and at least one actuating device (22, 24), according to any of the preceding claims, mechanically associated with an element (18, 20) of a seat for its displacement.

**6.** Seat according to claim 5, **characterised in that** it comprises at least one movable element (18, 20) mechanically associated with an actuating device (22, 24) according to claim 4, **in that** it comprises a device (50) adapted to bring the seat into at least one predetermined configuration under the action of a single command given by the user, and **in that** the or each predetermined threshold value is representative of the position of the associated actuator in a predetermined configuration of the seat.

**7.** Seat assembly, comprising at least two seats of similar structure according to any of claims 5 and 6, **characterised in that** the or each actuating device (22, 24) is in accordance with claim 2 or 3, and **in that** the identified reference positions of the actuator, for the respective actuating devices of the actuators, are identical.

**8.** Seat assembly according to claim 7, **characterised in that** the said seats are arranged side by side.

**FIG.1**

*Début*

100 — Mise en place de l'actionneur dans une première position de référence identifiée

102 — Relevé d'une première valeur brute de mesure ($P_{lue1}$) de référence

104 — Mise en place de l'actionneur dans une deuxième position de référence identifiée

106 — Relevé d'une deuxième valeur brute de mesure ($P_{lue2}$) de référence

108 — Entrée des valeurs théoriques de référence ($P_{cal1}$, $P_{cal2}$) associées aux positions de référence identifiées de l'actionneur

110 — Détermination de la fonction affine de correction

112 — Mémorisation de la fonction affine de correction

*Fin*

## FIG.3

*FIG.2*

$P_{cal2}$

$P_{corr}$

$P_{cal1}$

$P_{lue1}$     $P_{lue}$     $P_{lue2}$

*FIG.4*

12

Commande
de déplacement
enfoncée?

Arrêt

non

202

200

oui

Mise en marche de l'actionneur
dans le sens choisi

204

Relevé valeur brute
de mesure ($P_{lue}$)

206

Calcul de la valeur
de mesure corrigée ($P_{corr}$)

208

## *FIG.5*

$P_{corr} > P_{max}$
?

oui

Arrêt

214

non

210

212

$P_{corr} < P_{min}$
?

oui

Arrêt

216

non

*Commande de position prédeterminée enfoncée?* 300

non — *Arrêt* 302

oui

304 — *Mise en marche de l'actionneur dans le sens correspondant*

306 — *Relevé valeur brute de mesure ($P_{lue}$)*

308 — *Calcul de la valeur de mesure corrigée ($P_{corr}$)*

$P_{corr} > P_{pred}$ ? 310

oui — *Arrêt* 312

non

## *FIG.6*